Europäisches Patentamt

European Patent Office

Office européen des brevets

(11) Publication number: **0 468 565 A2**

# EUROPEAN PATENT APPLICATION

(21) Application number: **91201748.0**

(22) Date of filing: **05.07.91**

(51) Int. Cl.⁵: **G01N 1/00, B01L 3/02**

(30) Priority: **23.07.90 US 556099**

(43) Date of publication of application:
**29.01.92 Bulletin 92/05**

(84) Designated Contracting States:
**AT BE CH DE DK ES FR GB GR IT LI NL SE**

(71) Applicant: **AKZO N.V.**
**Velperweg 76**
**NL-6824 BM Arnhem(NL)**

(72) Inventor: **Karp, Joseph George**
**2914 Tavistock Drive**
**Durham, NC 27712(US)**
Inventor: **Lipski, John Andy**
**4504 Baymoor Drive 306**
**Raleigh, NC 27612(US)**
Inventor: **Gaitonde, Dhananjay Dinanath**
**616-G East Knox street**
**Durham, NC 27701(US)**

(74) Representative: **Hermans, Franciscus G.M. et al**
**Patent Department AKZO N.V. Pharma Division P.O. Box 20**
**NL-5340 BH Oss(NL)**

(54) **Piercing and sampling probe.**

(57) A piercing and sampling probe for use in a sampling system for piercing the septum of a vacuum sealed container and aspirating a fluid sample from the container. The probe includes a first longitudinal portion constituting an end region of the probe and a second longitudinal portion which is longer than the first longitudinal portion. The first longitudinal portion of the probe has a beveled tip for piercing the septum of the container and inner and outer diameters which are narrower than the respective diameters of the second longitudinal portion. The probe further includes a shaped region for connecting the smaller diameter first longitudinal portion to the larger diameter second longitudinal portion.

The present invention relates to a sampling probe, particularly for use in an automated blood/plasma sampling system.

In such a system, fluid samples such as blood or plasma samples, are stored in containers, such as test tubes, which are vacuum sealed by way of a rubber septum that must be pierced in order to withdraw a sample which is to be tested. Known sample probe mechanisms accomplish this by way of a two part device including an outer piercing sheath which has a beveled edge and is driven by a motor mechnism to pierce the septum. A more narrow sampling probe is then lowered through the outer sheath into the vacuum sealed container to withdraw the required amount of fluid to be tested. In this known mechanism the tip of the narrow sampling probe comprises a flat edge, since it is not needed for piercing the septum, and also the flat edge provides greater accuracy in the measured amount of withdrawn fluid sample.

There are several disadvantages with the prior art sampling probe mechanism. First, it involves a two step process, piercing the septum with the outer, larger diameter sheath and lowering the more narrow sampling probe through the sheath into the container to withdraw the test sample. This requires two separate drive mechanims, one for the outer sheath and another for the sampling probe itself, which adds complexity and expense to the overall system.

It is an object of the present invention to reduce the complexity and cost of the known sampling probe mechanism described above.

It is a further object of the invention provide a sample probe mechanism which allows multiple samples to be taken from the vacuum sealed container without coring the septum.

The above and other objects are accomplished according to the invention by the provision of a piercing and sampling probe for use in a sampling system for piercing the septum of a vacuum sealed container and aspirating a fluid sample from the container, the probe including a first longitudinal portion constituting an end region of the probe and a second longitudinal portion which is longer than the first longitudinal portion, the first longitudinal portion of the probe having a beveled tip for piercing the septum of the container and inner and outer diameters which are narrower than the respective diameters of the second longitudinal portion, the probe further including a swaged region for connecting the smaller diameter first longitudinal portion to the larger diameter second longitudinal portion.

A sampling system employing a piercing and sampling probe according to the invention has the advantages of allowing a more simplified automated system compared to known sampling probe mechanisms for transferring a fluid sample from a vacuum sealed container to a test container in that only a single drive mechanism is required for piercing the septum of the container and simultaneously lowering the probe into the container. The sampling mechanism according to the invention further allows samples of possibly toxic fluids, such as blood or plasma samples, to be withdrawn from a vacuum sealed container while leaving the septum of the container intact, even after repeated sampling from the same vacuum sealed container.

There is thus virtually no possibility of an operator contacting the sample in the container.

BRIEF DESCRIPTION OF THE DRAWINGS

A preferred embodiment of the invention will be described in conjuction with the accompanying drawings wherein;

Figure 1 is a side elevational view of a sampling probe mechanism according to the invention;

Figure 2 is a rear elevational view of the mechanism shown in Figure 1; and

Figure 3 is an enlarged side elevation of the sampling probe shown in Figure 1;

Figure 3a is an enlarged view of the encircled area A - A shown in Figure 3.

DETAILED DESCRIPTION OF THE PREFERRED EMBODIMENT

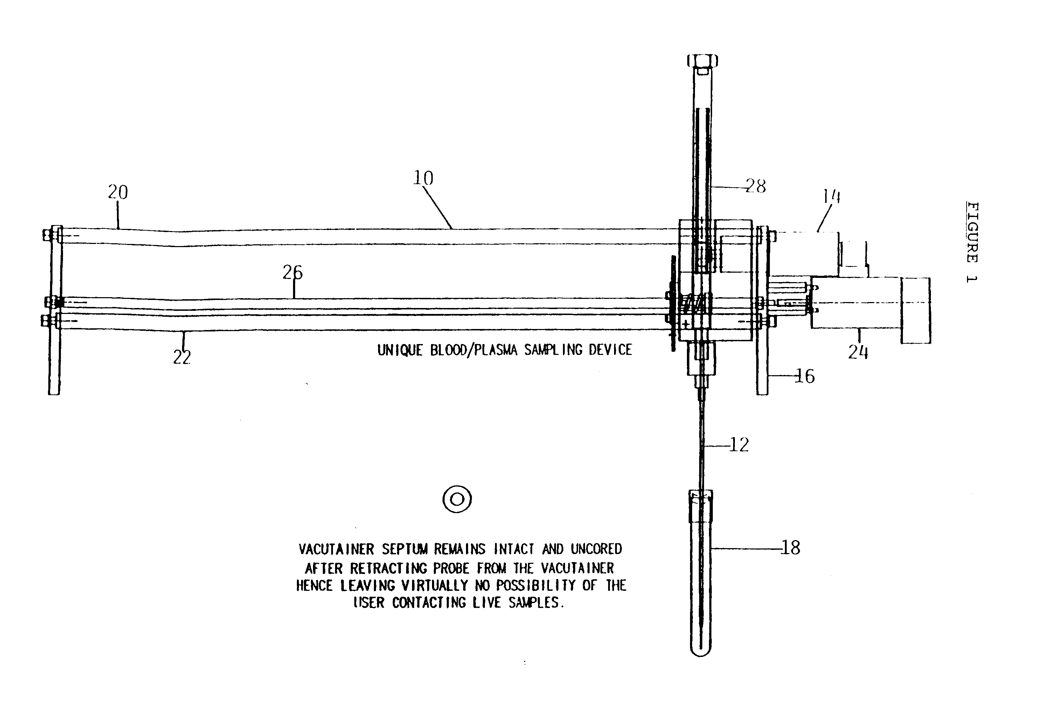

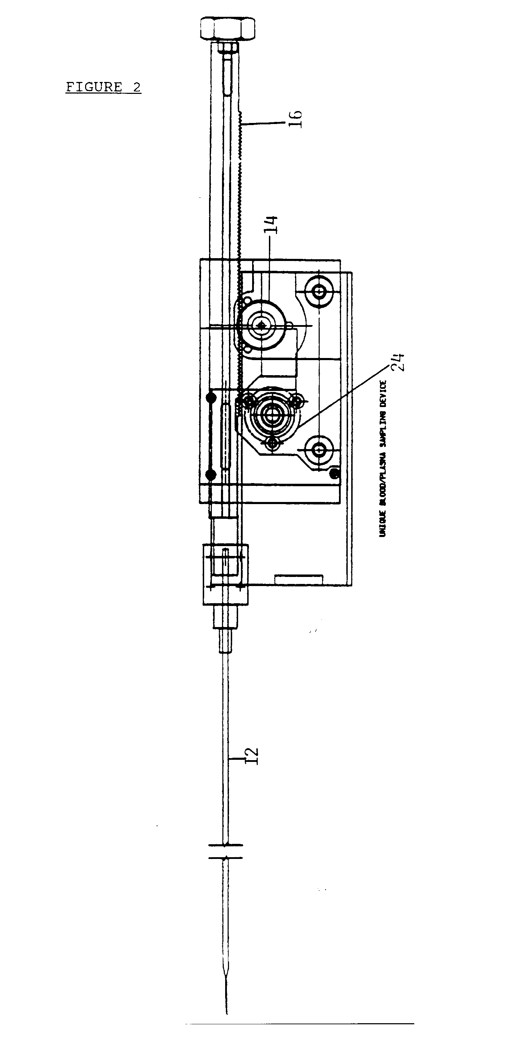

Referring to Figures 1 and 2, there is shown a sampling probe mechanism 10 according to the invention comprising a sampling probe 12, having a novel shape as will be described below, which is connected to a vertical drive mechanism including a vertical drive motor 14 operatively connected with a vertical gear rack 16 for vertically displacing sample probe 12 relative to a vacuum sealed container 18 in which a fluid sample is disposed. Probe 12 can additionally be horizontally displaced along horizontal guide rods 20, 22 by a horizontal drive motor 24 which is operatively connected to a horizontal lead screw 26. The probe can thus be moved horizontally from a first position as shown for obtaining a fluid sample from a container 18, to a second position (not shown) for dispensing the fluid sample into a test container, for example a cuvette, so that the test sample can be optically monitored in a manner known to those skilled in the art, and possibly to other positions, for example a probe washing station. Probe 18 is also coupled by way of appropiate tubing 28 with a vacuum source (not shown) for aspirating and dispensing fluid samples as is known in the art.

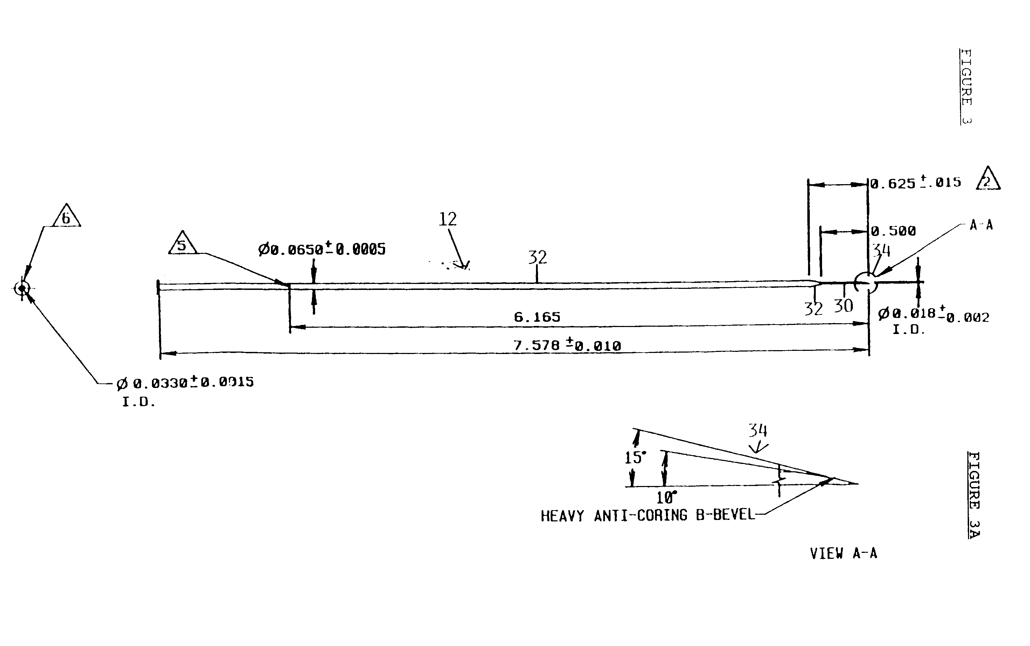

Referring to Figure 3, there is shown an enlarged view of a piercing and sampling probe 12 in accordance with the invention. Probe 12 has a first, narrow, longitudinal portion 30 connected to a relatively longer and larger diameter longitudinal portion 32 by a swaged region 34 which forms a transition between the smaller and larger diameter portions. Longitudinal portion 30 has a tri-bevel tip 34 as is well known for use with hypodermic needles. Figure 3a shows a further enlarged view of the tip 34 which is shown to include an intermediate bevel a. of 10° on both sides of the center line of the probe and an end bevel b. of 15°.

In a specific example of the piercing and sampling probe of the invention, longitudinal portion 30 is ½ inch long and has an inner diameter of 0.018 inches and an outer diameter of 0.041 inches. The swaged of shaped region 32 is 0.125 inches in length and transitions to longitudinal portion 32 which is 6.953 inches long and has an inner diameter of 0.033 inches and an outer diameter of 0.065 inches. The probe is preferably made of an anticorrosive metal, such as stainless steel.

The relative dimensions of longitudinal portions 30 and 32 are such that an accurately measured amount of test fluid can be aspirated into the probe despite the beveled tip of the probe, since the interior volume of longitudinal portion 32 is so large compared to any inaccuracy that may be introduced by the beveled tip. Additionally, the larger diameter longitudinal portion 32 is stiff enough to prevent buckling of the probe when the tip is driven through the septum of a vacuum sealed container as shown in Figure 1.

Obviously, numerous and additional modifications and variations of the present invention are possible in light of the above teachings. It is therefore to be understood that within the scope of the appended claims, the invention may be practiced otherwise than as specifically claimed.

## Claims

1. A piercing and sampling probe for use in a sampling system for piercing the septum of a vacuum sealed container and aspirating a fluid sample from the container, comprising: an elongated body having an unobstructed bore therethrough and including: (i) a first longitudinal portion having a free end provided with a beveled tip for piercing the septum of the container and an axial opening in the beveled tip communicating with the bore in said body; and (ii) a second longitudinal portion connected to said first longitudinal portion for receiving a volume of fluid from the container through said first longitudinal portion, said first and second longitudinal portions each having an inner diameter, with the inner diameter of said first longitudinal portion being smaller than the inner diameter of said second longitudinal portion.

2. A probe as defined in claim 1, wherein said first and second longitudinal portions each have a length and the length of said first longitudinal portion is relatively short compared to the length of said second longitudinal portion.

3. A probe as defined in claim 2, wherein said first and second longitudinal portions each have an outer diameter and the outer diameter of said first longitudinal portion is smaller than the outer diameter of said second longitudinal portion and said body further includes a shaped region connecting said first and said second longitudinal portions.

4. A method of piercing a septum of a vacuum sealed container and for withdrawing a sample of fluid from the container, comprising: providing a piercing and sampling probe comprising an elongated body having an unobstructed bore therethrough and including: (i) a first longitudinal portion having a free end provided with a beveled tip for piercing the septum of the container and an axial opening in the beveled tip communicating with the bore in the body; and (ii) a second longitudinal portion connected to the first longitudinal portion for receiving a volume of fluid from the container through the first longitudinal portion, the first and second longitudinal portions each having an inner diameter, with the inner diameter of the first longitudinal portion being smaller than the inner diameter of the second longitudinal portion; moving the piercing and sampling probe so that its beveled tip pierces the septum of the container and comes into contact with a fluid in the container; and aspirating a volume of fluid from the container through the axial opening in the beveled tip into the second longitudinal portion.

5. A method as defined in claim 4, wherein said moving step includes moving the piercing and sampling probe by an automated mechanism between one position out of axial alignment of the container and a second position generally axially aligned with the container and moving the piercing and sampling probe at the second position in the longitudinal direction of the piercing and sampling probe for piercing the septum of the container and coming into contact with the fluid in the container.

FIGURE 1

UNIQUE BLOOD/PLASMA SAMPLING DEVICE

VACUTAINER SEPTUM REMAINS INTACT AND UNCORED AFTER RETRACTING PROBE FROM THE VACUTAINER HENCE LEAVING VIRTUALLY NO POSSIBILITY OF THE USER CONTACTING LIVE SAMPLES.

FIGURE 2

UNIQUE BLOOD/PLASMA SAMPLING DEVICE

FIGURE 3

FIGURE 3A

VIEW A-A

HEAVY ANTI-CORING B-BEVEL

0.625 ± .015

0.500

⌀ 0.018 +0.002 I.D.

⌀ 0.0650 +0.0005

6.165

7.578 ± 0.010

⌀ 0.0330 ± 0.0015 I.D.

15°

10°

34

32 30

A-A